# EUROPÄISCHE PATENTSCHRIFT

(11) **EP 2 616 396 B1**
(45) Veröffentlichungstag und Bekanntmachung des Hinweises auf die Patenterteilung: **30.05.2018**
(21) Anmeldenummer: 12706432.7
(22) Anmeldetag: 26.01.2012
(51) Int. Cl.: C03B 27/04, C03B 35/24, C03B 27/048

(54) **VERFAHREN UND VORRICHTUNG ZUM HÄRTEN VON GLAS**
METHOD AND DEVICE FOR TEMPERING GLASS
PROCÉDÉ ET DISPOSITIF POUR LA TREMPE DU VERRE

(30) Priorität: 18.04.2011 AT 5422011
(43) Veröffentlichungstag der Anmeldung: 24.07.2013
(73) Patentinhaber: LISEC Austria GmbH, 3353 Seitenstetten (AT)
(72) Erfinder: MADER, Leopold, A-3364 Neuhofen/Ybbs (AT)
(74) Vertreter: Hehenberger, Reinhard
(86) Internationale Anmeldenummer: PCT/AT2012/000012
(87) Internationale Veröffentlichungsnummer: WO 2012/142629

(56) Entgegenhaltungen:
- EP-A1- 0 882 681
- EP-A2- 0 937 688
- DE-A1- 1 811 435
- US-A- 4 204 845

## Beschreibung

Die Erfindung betrifft ein Verfahren zum Härten von Flachglas und eine Vorrichtung, mit der Flachglas gehärtet werden kann.

Das Härten von Flachglas erfolgt in der Weise, dass das Flachglas auf eine Temperatur über der Härtetemperatur aufgeheizt wird (in Regel etwa 650°C) und dann abgeschreckt wird, so dass im Flachglas dieses härtende Spannungen entstehen.

Für das Härten von Flachglas sind viele Vorrichtungen bekannt geworden, wobei ein Problem regelmäßig darin besteht, die Aufheizzone von der Abschreck- bzw. Kühlzone zu trennen. Das Dokument DE1811435A1 offenbart ein Verfahren und eine Vorrichtung zum Härten von Flachglas, wobei Gaslager zum Einsatz kommen.

Der Erfindung liegt die Aufgabe zu Grunde, hier eine einfache und wirksame Lösung vorzuschlagen.

Diese Aufgabe wird erfindungsgemäß mit einem Verfahren gelöst, das die Merkmale von Anspruch 1 aufweist.

Die erfindungsgemäße Aufgabe wird auch durch eine Vorrichtung gelöst, welche die Merkmale des unabhängigen, auf die Vorrichtung gerichteten Anspruches aufweist.

Bevorzugte und vorteilhafte Ausgestaltung der Erfindung sind Gegenstand der Unteransprüche.

Da bei der erfindungsgemäßen Arbeitsweise das aus der Aufheizzone heraustretende Flachglas beidseitig durch Gaslager, insbesondere Luftlager, abgestützt wird, ist nicht nur die wirksame Trennung zwischen Aufheiz- und Abschreckzone gegeben, sondern es wird auch ein schonender Transport der erhitzten Flachglasscheibe aus der Aufheizzone in die Abschreckzone gewährleistet.

Das Trennen von Aufheizzone zu Abkühlzone erfolgt besonders wirksam, wenn die Düsen, aus welchen das Gas für das Ausbilden der Gaslager austritt, so schräg gestellt sind, dass sie von der Aufheizzone weg zur Kühlzone weisen. Zusätzlich kann im Rahmen der Erfindung vorgesehen sein, dass die Düsen für das das Abschrecken bewirkende Gas in der Abschreckzone so ausgerichtet sind, dass sie zu den Düsen für ds Luftlager hin gerichtet sind, wobei zwischen den Düsen für das Ausbilden der Luftlager einerseits und den Düsen für ds Ausbilden der Abschreckzone andererseits ein Spalt vorgesehen ist, der das Abströmen von Gas (in der Regel Luft) erlaubt.

Im Rahmen der Erfindung ist in Betracht gezogen, die Düsen (Stützdüsen), aus denen das Gas, das die Gaslager bildet, austritt, in Schwingungen zu versetzen. So wird erreicht, dass im Gas Druckwellen entstehen, die das sichere Zuführen der Flachglasscheibe zur Abschreckzone (beispielsweise gebildet durch das wenigstens eine Paar von Abschreckdüsen) vorteilhaft unterstützen. Die Schwingungen sind bevorzugt so gerichtet, dass sich die Düsen quer, insbesondere normal (senkrecht) zur Bewegungsrichtung der Flachglasscheibe bewegen. Die Schwingungen können im Frequenzbereich von Ultraschall liegen.

Weitere Einzelheiten und Merkmale der Erfindung ergeben sich aus der nachstehenden Beschreibung eines bevorzugten Ausführungsbeispiels der Erfindung an Hand der schematischen Zeichnung.

Bei der erfindungsgemäßen Anordnung wird eine Glasscheibe 1 (Flachglasscheibe)aus der Aufheizzone 2, die beispielsweise durch eine Reihe von Keramikdüsen, aus denen erhitztes Gas (Luft) austritt, gebildet ist, in eine Abschreckzone 3 geleitet, die aus wenigstens einem Paar von Düsen 4 gebildet ist, die beidseits der Transportbahn 5 der Glasscheibe 1, die zu härten ist, angeordnet sind und aus welchen gekühltes Gas (Luft) austritt. Die in der Abschreckzone vorgesehenen Düsen 4 sind quer zur Transportbahn 5 (Pfeile 6) verstellbar, so dass der Abstand der Düsen 4 voneinander an die Stärke der zu härtenden Glasscheibe 1 angepasst werden kann.

Zwischen der Aufheizzone 2, gebildet durch Keramikdüsen einerseits, und der Abschreckzone 3, gebildet durch wenigstens ein Paar Abschreckdüsen 4 andererseits, sind erfindungsgemäß wenigstens zwei einander gegenüberliegende Düsen 7 (Stützdüsen) vorgesehen, aus welchen ein gasförmiges Medium (Luft) in Richtung auf die Förderbahn 5 der Glasscheibe 1, die zu härten ist, austritt. Die Düsen 7 sind quer (Pfeile 8) zur Transportbahn 4 der zu härtenden Glasscheibe 1 verstellbar angeordnet. So werden beidseits der Glasscheiben 1 angeordnete Luftlager (jeweils zwischen einer Düse 7 und der Glasscheibe 1) gebildet.

Die Austrittsöffnungen 9 aus denen Stützdüsen 7, aus welchen das Gas (Luft) austritt, das Luftlager bildet, sind so ausgerichtet, dass sie von der Aufheizzone 2 weg schräg gestellt sind. So wird verhindert, dass gekühltes Gas aus der Abschreckzone 3 zur Aufheizzone 2 hin strömt und deren Wirksamkeit beeinträchtigt.

Zusätzlich wird erreicht, dass die an beiden Seiten der Glasscheibe 1 ausgebildeten Gaslager (Luftlager)durch Verstellen der Düsen 7 quer zur Förderbahn 5 der zu härtenden Glasscheibe 1 der Glasscheibe bis auf einen geringen Abstand von dieser, wirksam ausgebildet werden können.

Diese Luftlager können in einer bevorzugten Ausführungsform auch zwischen der zu härtenden Glasscheibe 1 und den Abschreckdüsen 4 (Düsen in der Abschreckzone 3) ausgebildet werden, indem diese der Glasscheibe 1 entsprechend angenähert werden.

Auch die Austrittsöffnungen 10 in den Düsen 4 der Abschreckzone 3 sind zur Ebene der Transportbahn 5 schräg gestellt und zwar so, dass sie auf die Düsen 7 für das Ausbilden der Luftlager hin schräg gestellt sind. So kann erreicht werden, dass Gas (Luft) zwischen den Stützdüsen 7 und den Abschreckdüsen 4 nach außen (Pfeile 11) abströmen kann.

In der Praxis wird bei Betrieb der erfindungsgemäßen Vorrichtung so vorgegangen, dass die Stützdüsen 7 und auch die Düsen 4 in der Abschreckzone 3 zunächst in einer von der Transportbahn 5 der zu härtenden Glasscheibe 1 entfernten Stellung (Bereitschaftslage) angeordnet sind. Erst wenn der vordere Rand der Glasscheibe 1 aus der Aufheizzone 2 und zwischen die Stützdüsen 7 tritt, werden diese einander so weit angenähert, dass sich beidseits der Glasscheibe 1 die diese stabilisierenden und führenden Gaslager (Luftlager) ausgebildet werden.

In der Praxis können mehrere Paare von Stützdüsen 7 ebenso vorgesehen sein wie mehrere Paare von Abschreckdüsen 4. Paare von Stützdüsen 7 können auch zwischen Paaren von Abschreckdüsen 4 vorgesehen sein.

Die Stützdüsen 7 sind unabhängig von ihrer Verstellbarkeit in Richtung der Doppelpfeile 8 in Schwingungen versetzbar, wozu den Stützdüsen 7 (nicht gezeigte) Schwingungserzeuger zugeordnet sind. Die Richtung der Schwingungen der Stützdüsen 7 ist im Wesentlichen quer, insbesondere senkrecht zur Transportbahn 5 der Flachglasscheibe 1. Die Frequenz der Schwingungen der Stützdüsen 7 kann im Frequenzbereich von Ultraschall liegen.

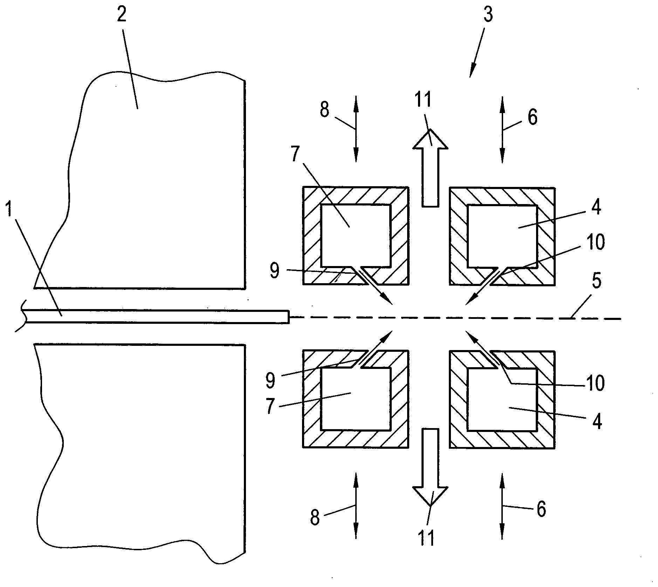

Wenngleich in der in der Zeichnung gezeigten Ausführungsform in jeder Stützdüse 7 und auch in jeder Abschreckdüse 4 jeweils eine Reihe von Austrittsöffnungen 9 bzw. 10 vorgesehen ist, können in einer abgeänderten Ausführungsform in den Stützdüsen 7 und/oder den Abschreckdüsen 4 zwei oder mehr als zwei Reihen von Öffnungen 9 und 10 vorgesehen sein.

Ebenso ist in Betracht gezogen, in den Stützdüsen 7 und/oder den Abschreckdüsen 4 statt einer Reihe von Öffnungen 9 oder 10 einen Schlitz oder zwei oder mehr als zwei Schlitze für den Austritt von Gas vorzusehen. Auch solche Schlitze sind bevorzugt zur Transportbahn 5 der Flachglasscheibe 1 so schräg gestellt, wie das für die Öffnungen 9 oder 10 gezeigt und beschrieben ist.

Zusammenfassend kann ein Ausführungsbeispiel der Erfindung wie folgt beschrieben werden.

Bei einer Vorrichtung zum Härten von Flachglas werden die Glasscheiben 1 zwischen einer Aufheizzone 2 und einer Abschreckzone 3 beidseits durch Luftlager abgestützt. Die Düsen 7, aus welchen unter Druck stehende Luft zum Ausbilden der Luftlager austritt, sind so schräg gestellt, dass sie von der Aufheizzone 2 weg zur Abschreckzone 3 hin weisen, wodurch verhindert wird, dass gekühlte Luft aus der Abschreckzone 3 in Richtung auf die Aufheizzone 2 strömt.

## Patentansprüche

1. Verfahren zum Härten von Flachglas, wobei Flachglas in einer Aufheizzone bis auf die Härtetemperatur aufgeheizt und in einer nachgeschalteten Abschreckzone abgeschreckt wird, **dadurch gekennzeichnet, dass** zwischen der Aufheizzone und der Abschreckzone die Glasscheibe beidseitig durch Gaslager, insbesondere Luftlager, abgestützt wird.

2. Verfahren nach Anspruch 1, **dadurch gekennzeichnet, dass** die Luftlager zwischen Stützdüsen und der Glasscheibe ausgebildet werden.

3. Verfahren nach Anspruch 2, **dadurch gekennzeichnet, dass** die Stützdüsen, aus welchen das Gas zum Ausbilden der Gaslager austritt, in Betrieb genommen werden, so bald der vordere Rand der zu härtenden Glasscheibe im Bereich der Stützdüsen ankommt.

4. Verfahren nach einem der Ansprüche 1 bis 3, **dadurch gekennzeichnet, dass** das Gas in der Abschreckzone in Richtung auf die Stützdüsen strömt.

5. Verfahren nach einem der Ansprüche 2 bis 4, **dadurch gekennzeichnet, dass** das Gas aus den Stützdüsen und aus den Düsen der Abschreckzone in einem Bereich zwischen den Stützdüsen und den Düsen der Abschreckzone abströmt.

6. Verfahren nach einem der Ansprüche 2 bis 5, **dadurch gekennzeichnet, dass** die Stützdüsen in quer zur Bewegungsrichtung des Flachglases gerichtete Schwingungen versetzt werden.

7. Anordnung zum Ausführen des Verfahrens nach einem der Ansprüche 1 bis 6 mit einer Aufheizzone (2), die von wenigstens zwei Keramikdüsen, die mit heißem Gas beaufschlagt sind, gebildet ist, und einer Abschreckzone (3), die von wenigstens zwei Düsen (4) gebildet wird, die mit gekühltem Gas beaufschlagt sind, **dadurch gekennzeichnet, dass** zwischen der Aufheizzone (2) und der Abschreckzone (3) wenigstens ein Paar einander gegenüberliegender Stützdüsen (7) vorgesehen ist.

8. Anordnung nach Anspruch 7, **dadurch gekennzeichnet, dass** die Stützdüsen (7) quer (Pfeile 8)zur Transportebene (5) der Glasscheibe (1) verstellbar sind.

9. Anordnung nach Anspruch 7 oder 8, **dadurch gekennzeichnet, dass** die Austrittsöffnungen (9) der Stützdüsen (7) zur Ebene der Transportbahn (5) der Glasscheibe (1)unter einem spitzen Winkel schräg gestellt sind.

10. Anordnung nach Anspruch 9, **dadurch gekennzeichnet, dass** die Austrittsöffnungen (9) der Stützdüsen (7) von der Aufheizzone (2) zur Abschreckzone (3) hin schräg gestellt sind.

11. Anordnung nach einem der Ansprüche 7 bis 10, **dadurch gekennzeichnet, dass** den Stützdüsen (7) Schwingungserzeuger zugeordnet sind.

## Claims

1. Method for tempering flat glass, wherein flat glass is heated in a heating zone to the tempering temperature and quenched in a downstream quenching zone, **characterized in that** between the heating zone and the quenching zone, the glass pane is supported on both sides by gas bearings, in particular air bearings.

2. Method according to claim 1, **characterized in that** the air bearings are formed between support nozzles and the glass pane.

3. Method according to claim 2, **characterized in that** the support nozzles, from which the gas exits to form the gas bearings, are put into operation as soon as the front edge of the glass to be tempered arrives in the region of the support nozzles.

4. Method according to one of the claims 1 to 3, **characterized in that** the gas flows in the quenching zone in the direction towards the support nozzles.

5. Method according to one of the claims 2 to 4, **characterized in that** the gas flows out of the support nozzles and out of the nozzles of the quenching zone into a region between the support nozzles and the nozzles of the quenching zone.

6. Method according to one of the claims 2 to 5, **characterized in that** the support nozzles are made to vibrate transversely to the direction of movement of the flat glass.

7. Arrangement for carrying out the method according to one of the claims 1 to 6, having a heating zone (2) which is formed by at least two ceramic nozzles, which are supplied with hot gas, and a quenching zone (3) which is formed by at least two nozzles (4), which are supplied with cooled gas, **characterized in that** at least one pair of mutually opposite support nozzles (7) is provided between the heating zone (2) and the quenching zone (3).

8. Arrangement according to claim 7, **characterized in that** the support nozzles (7) are adjustable transversely (arrows 8) to the transport plane (5) of the glass pane (1) .

9. Arrangement according to claim 7 or 8, **characterized in that** the outlet openings (9) of the support nozzles (7) are inclined at an acute angle to the plane of the transport path (5) of the glass pane (1).

10. Arrangement according to claim 9, **characterized in that** the outlet openings (9) of the support nozzles (7) are positioned in an inclined manner from the heating zone (2) to the quenching zone (3).

11. Arrangement according to one of the claims 7 to 10, **characterized in that** the support nozzles (7) are associated with vibration generators.

## Revendications

1. Procédé pour la trempe de verre plat, dans lequel le verre plat est chauffé jusqu'à la température de trempe dans une zone de chauffage puis trempé dans une zone de trempe, **caractérisé en ce qu'**entre la zone de chauffage et la zone de trempe, la vitre est soutenue des deux côtés par des coussins de gaz, en particulier des coussins d'air.

2. Procédé selon la revendication 1, **caractérisé en ce que** les coussins d'air sont formés entre des buses de soutien et la vitre.

3. Procédé selon la revendication 2, **caractérisé en ce que** les buses de soutien desquelles sort le gaz servant à former les coussins de gaz sont mises en service dès que le bord avant de la vitre à tremper arrive à leur niveau.

4. Procédé selon l'une des revendications 1 à 3, **caractérisé en ce que** le gaz s'écoule dans la zone de trempe en direction des buses de soutien.

5. Procédé selon l'une des revendications 2 à 4, **caractérisé en ce que** le gaz s'écoule hors des buses de soutien et hors des buses de la zone de trempe dans une zone comprise entre les buses de soutien et les buses de la zone de trempe.

6. Procédé selon l'une des revendications 2 à 5, **caractérisé en ce que** les buses de soutien sont mises en vibration dans une direction transversale par rapport au sens de déplacement du verre plat.

7. Disposition pour la mise en oeuvre du procédé selon l'une des revendications 1 à 6 avec une zone de chauffage (2) qui est formée par au moins deux buses en céramique recevant du gaz chaud et une zone de trempe (3) qui est formée par au moins deux buses (4) recevant du gaz refroidi, **caractérisée en ce qu'**il est prévu entre la zone de chauffage (2) et la zone de trempe (3) au moins une paire de buses de soutien (7) qui se font face.

8. Disposition selon la revendication 7, **caractérisée en ce que** les buses de soutien (7) sont déplaçables transversalement (flèche 8) par rapport au plan de transport (5) de la vitre (1).

9. Disposition selon la revendication 7 ou 8, **caractérisée en ce que** les ouvertures de sortie (9) des buses de soutien (7) sont placées à l'oblique à angle aigu par rapport à la trajectoire de transport (5) de la vitre (1).

10. Disposition selon la revendication 9, **caractérisée en ce que** les ouvertures de sortie (9) des buses de soutien (7) sont placées à l'oblique de la zone de chauffage (2) vers la zone de trempe (3).

11. Disposition selon l'une des revendications 7 à 10, **caractérisée en ce que** des générateurs de vibrations sont associés aux buses de soutien (7).
